# EUROPÄISCHE PATENTANMELDUNG

(11) **EP 2 781 769 A1**
(43) Veröffentlichungstag der Anmeldung: **24.09.2014**
(21) Anmeldenummer: 14401036.0
(22) Anmeldetag: 10.03.2014
(51) Int. Cl.: F16B 13/14

(54) **Befestigungsanordnung und Verfahren zum Verankern einer Befestigungsanordnung**

(30) Priorität: 22.03.2013 DE 102013102936
(71) Anmelder: fischerwerke GmbH & Co. KG, 72178 Waldachtal (DE)
(72) Erfinder: Grün, Jürgen, 79268 Bötzingen (DE); Jakob, Rainer, 79111 Freiburg (DE); Pfaff, Reinhold, 79211 Denzlingen (DE)

(57) **Zusammenfassung**

Die Erfindung betrifft eine Befestigungsanordnung (1) und ein Verfahren für die Befestigung eines Gegenstands (2) an einem Untergrund (3), mit einem Befestigungselement (10), das einen Verbindungsabschnitt (13) zum Verbinden mit einem Gegenstand (2) und einen Verankerungsabschnitt (12) aufweist, der mittels einer aushärtbaren Masse in einer Öffnung (5) in einem Untergrund (3) verankerbar ist. Um eine möglichst gute Verteilung der Masse in der Öffnung (5) zu erreichen, schlägt die Erfindung vor, dass der Verankerungsabschnitt (12) von einem Gehäuse (11) umgeben ist, das Durchtrittsöffnungen (25) für eine aushärtbare Masse aufweist und das auf einer dem Verbindungsabschnitt (13) zugewandten Seite (26) mindestens zwei gegenüberliegende Einfüllöffnungen (27) aufweist, durch die die Masse injiziert wird.

## Beschreibung

Die Erfindung betrifft eine Befestigungsanordnung mit den Merkmalen des Oberbegriffs des Anspruchs 1 sowie ein Verfahren zum Verankern einer Befestigungsanordnung mit den Merkmalen des Oberbegriffs des Anspruchs 9.

Aus der Druckschrift EP 2 481 858 A1 ist die Befestigung eines Gegenstands an einem Mauerwerk bekannt, bei dem in das Mauerwerk eine schlitzförmige Öffnung eingebracht wird, in der dann mittels einer aushärtbaren Masse ein Befestigungselement verankert wird. Das Befestigungselement weist einen flächigen Verankerungsabschnitt auf, der im Einbauzustand zumindest teilweise in der Öffnung angeordnet ist, und einen Verbindungsabschnitt, beispielsweise ein Gewindebolzen, der vom Mauerwerk weg ragt und mit dem der zu befestigende Gegenstand verbunden werden kann.

Aufgabe der Erfindung ist, eine derartige Befestigungsanordnung bezüglich seiner Haltewerte zu verbessern.

Diese Aufgabe wird erfindungsgemäß durch die Befestigungsanordnung mit den Merkmalen des Anspruchs 1 sowie durch das Verfahren mit den Merkmalen des Anspruchs 9 gelöst. Die erfindungsgemäße Befestigungsanordnung für die Befestigung eines Gegenstandes an einem Untergrund, insbesondere einem Mauerwerk, umfasst insbesondere ein Befestigungselement, das einen Verankerungsabschnitt aufweist. Der Verankerungsabschnitt ist in eine Öffnung im Mauerwerk einsetzbar und mittels einer aushärtbaren Masse verankerbar. Die Öffnung kann beispielsweise eine Bohrung oder ein Schlitz sein. Die Aufzählung ist nicht abschließend.

Das Befestigungselement weist weiterhin einen Verbindungsabschnitt zum Verbinden mit einem zu befestigenden Gegenstand auf. Der Verbindungsabschnitt kann dabei beispielsweise ein Innen- oder Außengewinde, ein Loch, ein Haken oder eine Zahnung aufweisen. Der Verbindungsabschnitt kann geometrisch getrennt vom Verbindungsabschnitt sein, beispielsweise ein Gewindebolzen, der an ein rechteckiges Blech als Verankerungsabschnitt geschweißt ist, kann sich mit diesem aber auch geometrisch überschneiden, beispielsweise eine Innengewindehülse, die von einem halbkreisförmigen Blech als Verankerungsabschnitt umgeben ist und mitsamt dem Verankerungsabschnitt in der Öffnung des Untergrunds eingebettet wird.

Kennzeichnend für die Erfindung ist, dass der Verankerungsabschnitt von einem Gehäuse umgeben ist, welches Durchtrittsöffnungen für eine aushärtbare Masse aufweist. Das Gehäuse dient dazu, die aushärtbare Masse zu verteilen und zu halten, bevor sie ausgehärtet ist. Insbesondere wenn innerhalb des Untergrundes Löcher sind, beispielsweise weil es sich um ein Mauerwerk aus Hochlochziegeln handelt, ergibt sich hierdurch ein deutlich verbesserter Verbund. "Umgeben" meint nicht notwendigerweise, dass der Verankerungsabschnitt vollständig umschlossen ist, insbesondere kann auch eine Seite offen sein oder mehrere Seiten teilweise offen sein, wichtig ist, dass die beschriebene Funktion des Verteilens und Haltens der Masse für zumindest einen wesentlichen Teil des Verankerungsabschnitts gewährleistet ist. Die Durchtrittsöffnungen sind daher auch klein im Verhältnis zur Oberfläche des Gehäuses, insbesondere sind sie jeweils kleiner als 25 mm², vorzugsweise kleiner 10 mm². Die Durchtrittsöffnungen sind insbesondere über einen wesentlichen Teil der seitlichen Oberfläche des Gehäuses verteilt, wobei die seitliche Oberfläche derjenige Anteil der Oberfläche ist, der im Wesentlichen senkrecht zur Einbringrichtung des Befestigungselements in den Untergrund steht.

Zur Injektion und gleichmäßigen Verteilung der aushärtbaren Masse sieht die Erfindung vor, dass das Gehäuse auf einer dem Verbindungsabschnitt zugewandten Seite mindestens zwei Einfüllöffnungen aufweist. Insbesondere bei besonders großen und/oder flächigen Verankerungsabschnitten hat sich dies als besonders günstig für eine gute Verteilung über den Verankerungsabschnitt erwiesen und begünstig so hohe Haltewerte der Befestigungsanordnung. Die Einfüllöffnungen müssen so groß sein, dass sie zum Injizieren der Masse mit einer Auspresskartusche geeignet sind. Insbesondere ist der Querschnitt der Einfüllöffnungen deutlich größer, insbesondere mindestens 4-mal größer, als der Querschnitt der größten Durchtrittsöffnung. Die Einfüllöffnungen sind insbesondere gegenüberliegend in Bezug auf eine Mittelachse des Befestigungselements angeordnet, um die Verteilung zu begünstigen.

Um eine einfache, fehlervermeidende Montage zu erreichen, bildet das Gehäuse mit dem Befestigungselement vorzugsweise eine vormontierte Einheit. "Vormontiert" bedeutet, dass das Gehäuse und das Befestigungselement derart miteinander verbunden sind, dass sie beim Transport und beim Einsetzen in eine Öffnung im Untergrund auch dann nicht getrennt werden, wenn entweder nur das Gehäuse oder nur das Befestigungselement gegriffen wird.

In einer bevorzugten Ausführungsform ist der Verankerungsabschnitt flächig ausgebildet. Mit "flächig" ist gemeint, dass ein gedanklich den Verankerungsabschnitt umschreibender Körper in einer Dimension deutlich kleiner ist als in den beiden anderen, insbesondere liegt das Verhältnis zur nächst größeren Dimension bei mindestens 3, insbesondere bei mindestens 5. "flächig" schließt dabei insbesondere auch ein, dass der Verankerungsabschnitt nicht eben, also beispielsweise gewellt, ist. Der Verankerungsabschnitt ist hierdurch in eine schlitzförmige Öffnung im Mauerwerk einsetzbar und mittels einer aushärtbaren Masse verankerbar. Mit "schlitzförmig" ist gemeint, dass der Querschnitt einer Mündung der Öffnung in einer Dimension deutlich kleiner ist als in einer anderen. Insbesondere korrespondieren die Öffnung und der Verankerungsabschnitt geometrisch miteinander. Eine derart flächige Ausbildung ermöglicht eine einfache Erstellung der Öffnung, beispielsweise mit einem Winkelschleifer, und die Einleitung hoher Haltekräfte in den Untergrund.

Vorzugsweise liegt das Gehäuse innen am Verankerungsabschnitt an und/oder es besteht ein enger Spalt. Hierdurch wird erreicht, dass die Befestigungsanordnung insgesamt kompakt ist und eine relativ kleine Öffnung im Untergrund zur Verankerung ausreicht. Mit einem "engen Spalt" ist eine Spaltbreite gemeint, die maximal dem Doppelten einer Wandungsdicke des Gehäuses in diesem Bereich entspricht. Insbesondere ist die Spaltbreite geringer als die Wandungsdicke. Anlage und Spalt schließen sich dabei nicht aus, sondern die Erfindung schlägt insbesondere vor, dass der Verankerungsabschnitt durch Stege, Rippen, Noppen oder dergleichen mittig innerhalb des Gehäuses gehalten wird, um dadurch im sonstigen Bereich des Gehäuses einen engen Spalt zwischen Gehäuse und Verankerungsabschnitt zu gewährleisten. Hierdurch wird eine besonders gute Verteilung der aushärtbaren Masse und somit unabhängig vom Untergrund und vom jeweiligen Vorgehen des Verarbeiters für hohe Haltewerte gesorgt.

In einer bevorzugten Ausführungsform sind das Gehäuse und der Verankerungsabschnitt im Wesentlichen kreissegmentförmig. Damit ist gemeint, dass in einer Projektion der Umriss im Wesentlichen einem Kreissegment entspricht. Diese Form ermöglicht eine einfache Erstellung einer korrespondierenden Öffnung im Untergrund mit einem Winkelschleifer oder dergleichen. Die Befestigungsanordnung kann somit die gesamte Öffnung ausfüllen und damit auch die gesamte Wandung innerhalb der Öffnung zur klebenden Verbindung mittels der aushärtbaren Masse zur Übertragung von Kräften aktivieren, so dass ein gutes Verhältnis zwischen dem Aufwand zur Erstellung der Öffnung und der Haltekraft besteht.

Die Verteilung innerhalb des Gehäuses wird vorzugsweise dadurch begünstigt, dass sich von mindestens einer Einfüllöffnung aus ein Verfüllkanal erstreckt, und zwar insbesondere entlang eines in Einbringrichtung vorderen Randes innen im Gehäuse. Dies ermöglicht, dass die aushärtbare Masse in Einbringrichtung der Befestigungsanordnung gesehen vor dem Befestigungselement entlang geleitet wird, um dann weiter verteilt zu werden. Vor dem Befestigungselement kann hierzu der gesamte Querschnitt des Gehäuses genutzt werden, was den Fluss der Masse begünstigt, während im Bereich des Verankerungsabschnitts sich unter Umständen nur ein enger Spalt ergibt.

Vorzugsweise weist der Verfüllkanal mehrere Verteilöffnungen ins Innere des Gehäuses auf. Hierdurch wird erreicht, dass die aushärtbare Masse gleichmäßig in den Bereich des Verankerungsabschnitts verteilt wird.

Um das Gehäuse geometrisch optimal auf die Geometrie des Verankerungsabschnitts und die Verteilung der aushärtbaren Masse abzustimmen und gleichzeitig eine einfache Herstellung zu ermöglichen, schlägt die Erfindung vor, dass das Gehäuse aus Kunststoff ist.

Das erfindungsgemäße Verfahren zum Verankern der beschriebenen Befestigungsanordnung sieht vor, dass die aushärtbare Masse durch die mindestens zwei Einfüllöffnungen in das Gehäuse injiziert wird. Auf die Vorteile dieses Verfahrens ist oben bereits eingegangen worden.

Vorzugsweise wird die aushärtbare Masse erst nach dem Einbringen des Verankerungsabschnitts und des Gehäuses in den Bereich der Öffnung injiziert. Zwar könnte beispielsweise bei Vollsteinen die Injektion auch unmittelbar nach Erstellung der Öffnung erfolgen, doch birgt dies die Gefahr, dass die Masse ungleichmäßig verteilt wird. Gerade bei Untergründen mit Hohlräumen kann die Masse vollständig in derartige Hohlräume fließen, so dass es überhaupt nicht zur Verankerung kommt. Durch das erfindungsgemäße Injizieren nach dem Einbringen der Befestigungsanordnung kann diese selbst zur optimalen Verteilung beitragen.

Wie oben dargestellt, schlägt die Erfindung vor, dass der Verankerungsabschnitt mit dem Gehäuse als vormontierte Einheit in die Öffnung eingebracht wird. Hierdurch wird einerseits vermieden, dass das Befestigungselement nicht ausversehen ohne Gehäuse in die Öffnung eingebracht wird. Andererseits wird vermieden, dass das Befestigungselement erst nach dem Einbringen der aushärtbaren Masse in das Gehäuse gefügt wird. Erfolgt die Injektion der Masse stets in ein Gehäuse, in dem bereits der Verankerungsabschnitt angeordnet ist, ist die Verteilung der Masse besser reproduzierbar, als wenn die Reihenfolge offen bleibt.

Die Erfindung wird nachfolgend anhand eines Ausführungsbeispiels erläutert.

Es zeigen:
- Figur 1: die erfindungsgemäße Befestigungsanordnung, verankert in einem Mauerwerk in einem Längsschnitt; und
- Figur 2: einen perspektivischen Längsschnitt durch die Befestigungsanordnung entlang der Schnittebene I-I aus Figur 1.

Die in den Figuren dargestellte Befestigungsanordnung 1 dient der Befestigung eines Gegenstandes 2, hier ein winkelförmiges Profil, an einem Untergrund 3, hier ein Mauerwerk aus Hochlochziegeln 4, mittels einer aushärtbaren Masse (nicht dargestellt).

Hierzu wurde in einem ersten Schritt eine schlitzförmige Öffnung 5 mit einem Winkelschleifer (nicht dargestellt) in den Untergrund 3 eingebracht. Die Öffnung 5 hat dementsprechend einen kreissegmentförmigen Längsschnitt. Die schlitzförmige Öffnung 5 erstreckt sich von einer Außenseite 6 des Untergrunds 3 durch einen Außensteg 7 des Hochlochziegels 4 bis zu einen inneren Steg 8 des Hochlochziegels 4. Die Öffnung 5 mündet somit zwischen Außensteg 7 und inneren Steg 8 in einen Hohlraum 9.

In die Öffnung 5 ist in einem zweiten Schritt ein Befestigungselement 10 mit einem vormontierten Gehäuse 11 eingesetzt worden. Das Befestigungselement 10 umfasst einen Verankerungsabschnitt 12 und einen Verbindungsabschnitt 13. Der Verankerungsabschnitt 12 ist ein im Wesentlichen kreissegmentförmiges, ebenes Stahlblech mit mehreren kreisförmigen Löchern 14. Der Verankerungsabschnitt 12 ist somit flächig. Die eine im Wesentlichen kreisförmige Vorderkante 15 des Verankerungsabschnitts 12 ist in Einbringrichtung E des Befestigungselements 10 nach vorne gewandt. Mittig an der geraden Hinterkante 16 des Verankerungsabschnitts 12 schließt der Verbindungsabschnitt 13 in Form eines angeschweißten Gewindebolzens 17 an. Der Gewindebolzen 17 ist so ausgerichtet, dass er senkrecht zur Hinterkante 16 und parallel zu der durch den Verankerungsabschnitt 12 definierten Ebene steht. Während sich der Verankerungsabschnitt 12 vollständig in der Öffnung 5 befindet - was nicht zwingend für die Verankerung ist -, ragt der Verbindungsabschnitt 13 aus der Öffnung 5 hervor. Der Gegenstand 2 ist mit einer Bohrung 18 über den Gewindebolzen 17 gestülpt und schlägt an der Außenseite 6 des Untergrunds 3 an. Mittels einer Unterlegscheibe 19 und einer Mutter 20 ist der Gegenstand 2 auf dem Gewindebolzen 17 gesichert.

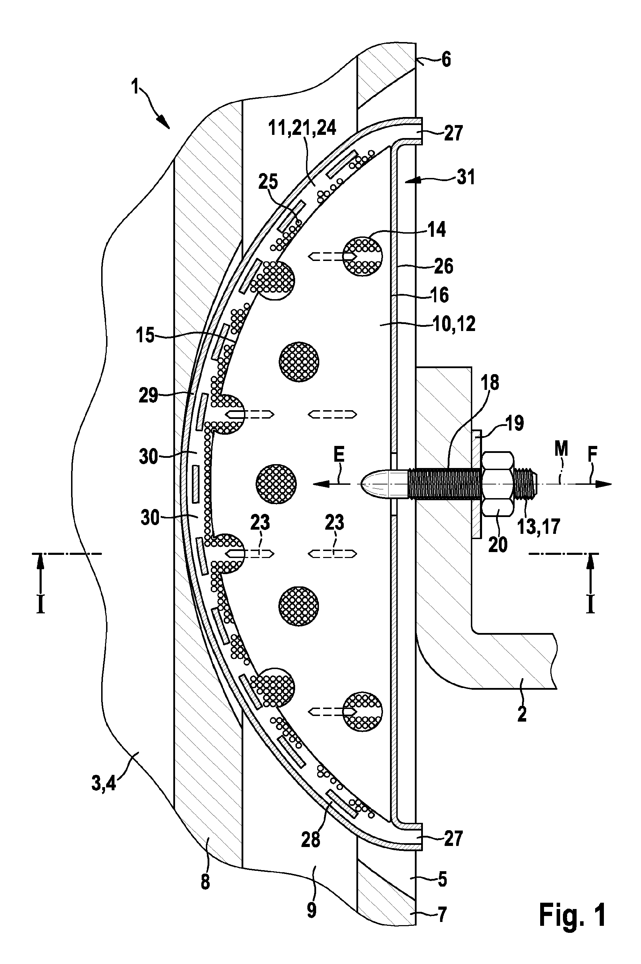

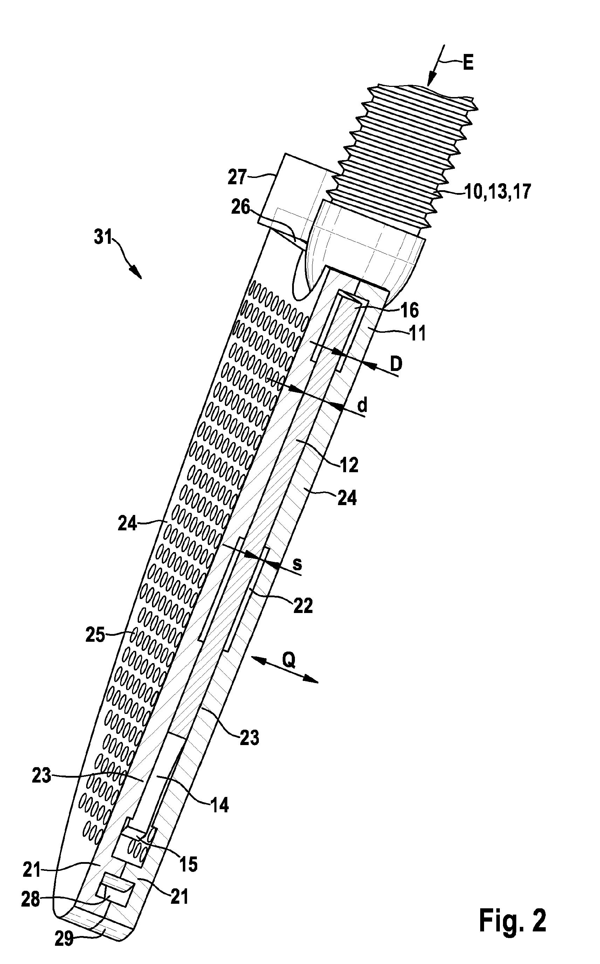

Das Gehäuse 11 umgibt den Verankerungsabschnitt 12 nahezu vollständig. Das Gehäuse 11 ist aus Kunststoff gefertigt und besteht aus zwei miteinander verbundenen, flächigen Gehäusehälften 21, von denen der Übersicht halber in Figur 1 nur eine Gehäusehälfte 21 dargestellt ist. Das Gehäuse 11 hat eine mit dem Verankerungsabschnitt 12 korrespondierende Form. In einer der Figur 1 entsprechenden Projektion weist das Gehäuse im Wesentlichen einen kreissegmentförmigen Umriss auf und es ist schmal im Vergleich zu dieser Projektion. Die Wandungsdicke D entspricht im Wesentlichen der Dicke d des den Verankerungsabschnitt 12 bildenden Stahlblechs. Hierdurch ergibt sich, dass das Gehäuse 11 innen nur einen engen Spalt 22 zum Verankerungsabschnitt 12 aufweist, insbesondere in einer Querrichtung Q (siehe Figur 2) zur flächigen Erstreckung des Verankerungsabschnitts 12. Die Spaltbreite s entspricht im Ausführungsbeispiel etwa einem Viertel der Wandungsdicke D des Gehäuses 11. Damit der Verankerungsabschnitt 12 in Querrichtung Q mittig im Gehäuse 11 zentriert ist, weist das Gehäuse 11 mehrere nach innen weisende Rippen 23 auf, die jeweils in Einbringrichtung E verlaufen und kurz sind gegenüber der Gesamterstreckung des Gehäuses 11 in Einbringrichtung E. Mit den Rippen 23 liegt das Gehäuse 11 innen am Verankerungsabschnitt 12 an.

Kreissegmentförmige, ebene Seitenwände 24 des Gehäuses 11 sind siebartig von Durchtrittsöffnungen 25 durchsetzt. Auf einer dem Verbindungsabschnitt 13 zugewandten hinteren Seite 26 weist das Gehäuse 11 zwei Einfüllöffnungen 27 auf. "Vorne" und "hinten" bezieht sich wiederum auf die Einbringrichtung E des Befestigungselements 10. Die Einfüllöffnungen 27 sind ganz außen, gegenüberliegend in Bezug auf die Mittelachse M des Befestigungselements 10 angeordnet und jeweils rohrförmig. Sie münden in das Innere des Gehäuses 11 und dort in einen Verfüllkanal 28, der sich innen entlang eines vorderen Randes 29 des Gehäuses 11 von einer Einfüllöffnung 27 bis zur anderen erstreckt. Der Verfüllkanal 28 ist in Einbringrichtung E und zu den Seitenwänden 24 geschlossen, weist aber ins Innere des Gehäuses 11 mehrere Verteilöffnungen 30 auf. Der Verankerungsabschnitt 12 ist zum Verfüllkanal 28 leicht beabstandet dargestellt. Er könnte aber auch an diesem anliegen.

Die Verbindung der Gehäusehälften 21 ist im Ausführungsbeispiel durch Kleben oder Verschweißen erfolgt. Vorzugsweise werden die beiden Gehäusehälften 11 gemeinsam nebeneinander im Kunststoff-Spritzgussverfahren hergestellt und sind durch ein Filmscharnier (nicht dargestellt) im Bereich des vorderen Rands 29 miteinander verbunden. Die Gehäusehälften 11 werden um 180 Grad in die in Figur 2 dargestellte Position verschwenkt und durch eine Rastverbindung (nicht dargestellt) im Bereich der hinteren Seite 26 des Gehäuses 11 miteinander verklipst.

In dem dargestellten Ausführungsbeispiel liegt der Verankerungsabschnitt 12 bereits im Gehäuse 11 ein, wenn das Befestigungselement 10 in die Öffnung geschoben wird. Alternativ könnte auch zuerst das Gehäuse 11 in die Öffnung geschoben werden und erst danach der Verankerungsabschnitt 12 in das Gehäuse 11 gesteckt werden. Dies setzt abweichend vom Ausführungsbeispiel allerdings voraus, dass im Bereich der hinteren Seite 26 des Gehäuses 11 ein Schlitz angeordnet ist.

Zum eigentlichen Verankern wird nacheinander oder gleichzeitig durch die Einfüllöffnungen 27 eine aushärtbare Masse (nicht dargestellt), beispielsweise ein zweikomponentiger Verbundmörtel, in das Gehäuse 11 injiziert. Die Masse verteilt sich über den Verfüllkanal 28, die Verteilöffnungen 30 und den Spalt 22 im Wesentlichen rings um den Verankerungsabschnitt 12 und tritt außerdem aus den Durchtrittsöffnungen 25 aus dem Gehäuse 11 aus. Das Injizieren durch beide Einfüllöffnungen 27 bewirkt eine besonders gute Verteilung. Bei größeren Befestigungselementen 10 können zusätzliche Einfüllöffnungen an der hinteren Seite 26 des Gehäuses 11 vorgesehen werden. Durch die Verteilung sorgt die Masse nach dem Aushärten für eine Verbindung des Verankerungsabschnitts 12 zum Außensteg 7 und zum inneren Steg 8 des Hochlochziegels 4. Außerdem dringt die Masse aber auch in den Hohlraum 9 des Hochlochziegels 4 und sorgt hierdurch für ein Hintergreifen des Außenstegs 7, also einer formschlüssigen Verbindung gegenüber einer längs der Mittelachse M wirkenden Zugkraft F. Die Löcher 14 im Verankerungsabschnitt 12 sorgen auch auf Seiten des Befestigungselements 10 für eine solche formschlüssige Verbindung. Neben der beschriebenen Verteilfunktion sorgt das Gehäuse 11 dafür, dass die Masse, solange sie noch fließfähig ist, nicht abtropft, was gerade im Bereich des Hohlraums 9 zur Wirkungslosigkeit der Masse führen würde. Insgesamt ergeben sich sehr hohe, auch bei unterschiedlichen Gegebenheiten des Untergrunds sicher reproduzierbare Haltewerte bei geringem Montageaufwand.

Da das Befestigungselement 10 mit dem Gehäuse 11 eine vormontierte Einheit 31 bildet, kann eine schnelle Verarbeitung erfolgen und es kann nicht passieren, dass das Einfügen des Gehäuses 11 in die Öffnung 5 vergessen wird.

### Bezugszeichenliste

### Befestigungsanordnung

- 1: Befestigungsanordnung
- 2: Gegenstand
- 3: Untergrund
- 4: Hochlochziegel
- 5: Öffnung
- 6: Außenseite des Untergrunds 3
- 7: Außensteg des Hochlochziegels 4
- 8: Innerer Steg des Hochlochziegels 4
- 9: Hohlraum
- 10: Befestigungselement
- 11: Gehäuse
- 12: Verankerungsabschnitt
- 13: Verbindungsabschnitt
- 14: Loch im Verankerungsabschnitt 12
- 15: Vorderkante des Verankerungsabschnitts 12
- 16: Hinterkante des Verankerungsabschnitts 12
- 17: Gewindebolzen
- 18: Bohrung im Gegenstand 2
- 19: Unterlegscheibe
- 20: Mutter
- 21: Gehäusehälfte
- 22: Spalt
- 23: Rippe
- 24: Seitenwand des Gehäuses 11
- 25: Durchtrittsöffnung
- 26: hintere Seite des Gehäuses 11
- 27: Einfüllöffnung
- 28: Verfüllkanal
- 29: vorderer Rand des Gehäuses 11
- 30: Verteilöffnung
- 31: vormontierte Einheit
- d: Dicke des Verankerungsabschnitts 12
- D: Wandungsdicke des Gehäuses 11
- E: Einbringrichtung des Befestigungselements 10
- F: Zugkraft
- M: Mittelachse des Befestigungselements 10
- Q: Querrichtung des Verankerungsabschnitts 12
- s: Spaltbreite

## Patentansprüche

1. Befestigungsanordnung (1) für die Befestigung eines Gegenstands (2) an einem Untergrund (3), mit einem Befestigungselement (10), das einen Verbindungsabschnitt (13) zum Verbinden mit einem Gegenstand (2) und einen Verankerungsabschnitt (12) aufweist, der mittels einer aushärtbaren Masse in einer Öffnung (5) in einem Untergrund (3) verankerbar ist, **dadurch gekennzeichnet, dass** der Verankerungsabschnitt (12) von einem Gehäuse (11) umgeben ist, das Durchtrittsöffnungen (25) für eine aushärtbare Masse aufweist und das auf einer dem Verbindungsabschnitt (13) zugewandten Seite (26) mindestens zwei Einfüllöffnungen (27) aufweist, die insbesondere gegenüberliegend in Bezug auf eine Mittelachse (M) des Befestigungselements (10) angeordnet sind.

2. Befestigungsanordnung nach Anspruch 1, **dadurch gekennzeichnet, dass** das Gehäuse (11) mit dem Befestigungselement (12) eine vormontierte Einheit (31) bildet.

3. Befestigungsanordnung nach Anspruch 1 oder 2, **dadurch gekennzeichnet, dass** der Verankerungsabschnitt (12) flächig ist.

4. Befestigungsanordnung nach einem der vorstehenden Ansprüche, **dadurch gekennzeichnet, dass** das Gehäuse (11) innen am Verankerungsabschnitt (12) anliegt, und/oder zwischen Gehäuse (11) und Verankerungsabschnitt (12) ein enger Spalt (22) besteht.

5. Befestigungsanordnung nach Anspruch 3 oder 4, **dadurch gekennzeichnet, dass** das Gehäuse (11) und der Verankerungsabschnitt (12) im Wesentlichen kreissegmentförmig sind.

6. Befestigungsanordnung nach einem der vorstehenden Ansprüche, **dadurch gekennzeichnet, dass** sich von mindestens einer Einfüllöffnung (27) aus entlang eines in Einbringrichtung (E) vorderen Randes (29) innen im Gehäuse (11) ein Verfüllkanal (28) erstreckt.

7. Befestigungsanordnung nach Anspruch 6, **dadurch gekennzeichnet, dass** der Verfüllkanal (28) mehrere Verteilöffnungen (30) ins Innere des Gehäuses (11) aufweist.

8. Befestigungsanordnung nach einem der vorstehenden Ansprüche, **dadurch gekennzeichnet, dass** das Gehäuse (11) aus Kunststoff ist.

9. Verfahren zum Verankern einer Befestigungsanordnung (1) nach einem der vorstehenden Ansprüche an einem Untergrund (3), wobei in den Untergrund (3) eine Öffnung (5) eingebracht wird und die Verankerung mittels Injektion einer aushärtbaren Masse erfolgt, **dadurch gekennzeichnet, dass** die Masse durch die mindestens zwei Einfüllöffnungen (27) in das Gehäuse (11) injiziert wird.

10. Verfahren nach Anspruch 9, **dadurch gekennzeichnet, dass** die aushärtbare Masse erst nach dem Einbringen des Verankerungsabschnitts (12) und des Gehäuses (11) injiziert wird.

11. Verfahren nach Anspruch 9 oder 10, **dadurch gekennzeichnet, dass** der Verankerungsabschnitt (12) mit dem Gehäuse (11) als vormontierte Einheit (31) in die Öffnung (5) eingebracht wird.
